# EUROPÄISCHE PATENTSCHRIFT

(11) **EP 4 143 058 B1**
(45) Veröffentlichungstag und Bekanntmachung des Hinweises auf die Patenterteilung: **23.10.2024**
(21) Anmeldenummer: 21722404.7
(22) Anmeldetag: 26.04.2021
(51) Int. Cl.: B60Q 3/50, B60Q 3/51, B60Q 3/53, B60Q 3/54, B60Q 3/62, B60Q 3/64, B60Q 3/14, B60Q 3/217, B60Q 3/225, B60Q 3/233, B60K 35/00, B60K 37/00

(54) **INNENVERKLEIDUNGSTEIL FÜR EIN KRAFTFAHRZEUG**
INTERIOR TRIM FOR A VEHICLE
GARNITURE INTERNE POUR VÉHICULE

(30) Priorität: 30.04.2020 DE 102020205520
(43) Veröffentlichungstag der Anmeldung: 08.03.2023
(73) Patentinhaber: VOLKSWAGEN AKTIENGESELLSCHAFT, 38440 Wolfsburg (DE)
(72) Erfinder: PEETZ, Arnaud, 38102 Braunschweig (DE)
(86) Internationale Anmeldenummer: PCT/EP2021/060841
(87) Internationale Veröffentlichungsnummer: WO 2021/219552

(56) Entgegenhaltungen:
- EP-A1- 3 150 442
- EP-A2- 3 573 043
- EP-B1- 3 150 442
- DE-A1- 102014 015 525
- DE-A1- 102015 013 669
- DE-A1- 102016 214 268

## Beschreibung

Die Erfindung betrifft ein Innenverkleidungsteil für ein Kraftfahrzeug mit den Merkmalen vom Oberbegriff des Patentanspruchs 1.

Ein derartiges Innenverkleidungsteil wird in der DE 10 2016 214 268 A1 beschrieben. Konkret beschreibt dieses Dokument eine Blende im Bereich einer Mittelkonsole zur Innenausstattung eines Kraftfahrzeugs. Die Blende umfasst ein lichtdurchlässiges Folienelement mit einer Vorderseite und einer der Vorderseite gegenüberliegenden Rückseite. Ferner ist ein erstes transparentes Kunststoffelement vorhanden, welches an der Rückseite des Folienelements aufgebracht ist. An dem ersten Kunststoffelement ist des Weiteren rückseitig des Folienelementes ein zweites, lichtundurchlässiges Kunststoffelement aufgebracht. An dem zweiten Kunststoffelement ist wiederum ein weiteres, lichtundurchlässiges Kunststoffelement angeordnet, welches als Einfassung für einen Lichtleiter dient und im Montagezustand einen Aufnahmeraum für den Lichtleiter ausbildet. Schließlich umfasst die Blende noch ein transparentes Kunststoffelement, welches auf der Vorderseite des Folienelements aufgebracht ist.

Ein Innenverkleidungsteil ist auch aus der DE 20 2015 106 328 U1 bekannt geworden. Konkret wird in dieser Schrift ein als Formteil ausgebildetes Verkleidungsteil für einen Fahrzeuginnenraum vorgeschlagen, welches eine Dekorschicht mit einer Dekorlage umfasst. Die Dekorlage weist Aussparungen auf, die sich durch die Dekorlage hindurch erstrecken. An einer Rückseite der Dekorlage ist eine erste, lichtdurchlässige Drucklage vorhanden, an deren Rückseite wiederum eine lichtundurchlässige, zweite Drucklage angeordnet ist. An die Rückseite der Dekorschicht ist eine transparente Kaschierung angeklebt, an die wiederum eine erstes, transparentes oder transluzentes Trägerteil angespritzt ist, welches von einer Lichtquelle durchleuchtbar ist. Zum Vermeiden von Streulicht sind an das erste Trägerteil weitere, lichtundurchlässige Trägerteile angespritzt. Allerdings kann Streulicht durch die zwischen der Dekorschicht und dem ersten Trägerteil angeordnete Kaschierung entweichen.

In der DE 10 2016 224 847 A1 wird ein Anzeigeelement für einen Gangwahlschalter eines Fahrzeugs beschrieben, welches ein Trägerelement mit einer Trägerausnehmung zum Aufnehmen einer Lichtquelle aufweist. Ferner ist ein Durchleuchtungselement vorhanden, mit einer zumindest ein dreidimensionales Symbol repräsentierenden Symbolausnehmung.

Das Durchleuchtungselement ist im Bereich der Symbolausnehmung lichtdurchlässig und derart an dem Trägerelement angeordnet, dass die Symbolausnehmung der Trägerausnehmung mit der Lichtquelle gegenüberliegt.

Ausgehend vom vorgenannten Stand der Technik liegt der vorliegenden Erfindung die Aufgabe zu Grunde, ein Innenverkleidungsteil für ein Kraftfahrzeug bereitzustellen, welches hinsichtlich seiner Streulicht-Dichtheit verbessert werden kann, kostengünstig herstellbar ist und eine optisch hochwertige Qualität aufweist.

Vorliegende Aufgabe wird durch ein Innenverkleidungsteil mit den Merkmalen von Patentanspruch 1 gelöst. Vorteilhafte Ausbildungen beziehungsweise Weiterbildungen der Erfindung sind den abhängigen Ansprüchen zu entnehmen.

Die Erfindung geht aus von einem Innenverkleidungsteil für ein Kraftfahrzeug, mit einem zumindest abschnittsweise lichtdurchlässigen Körper. Der lichtdurchlässige Körper ist auf einer Seite von einer eine Sichtseite bildenden, zumindest bereichsweise durchleuchtbaren Dekorschicht abgedeckt.

Dabei ist wenigstens ein lichtundurchlässiges, also opakes Bauteil mit Randbereichen und/oder mit einer Rückseite des lichtdurchlässigen Körpers verbunden. Dies erfolgt derart, dass wenigstens ein Durchleuchtungsbereich des lichtdurchlässigen Körpers verbleibt, der mit Lichtstrahlen wenigstens eines im Innenverkleidungsteil angeordneten Leuchtmittels durchleuchtbar ist.

Hinsichtlich der Dekorschicht ist zu erwähnen, dass diese wenigstens eine Farbschicht, vorzugsweise mehrere Farbschichten umfasst. Jede der Farbschichten ist bevorzugt eine Lackschicht. Die Dekorschicht kann beispielsweise in einem sogenannten IMD-Walzentiefdruckverfahren durchgeführt werden (IMD = In-Mould Decoration). Dieses Verfahren ist sehr kostengünstig und eignet sich gut für die Massenherstellung. Da dieses Verfahren bekannt ist, soll hier nicht näher darauf eingegangen werden.

Die Erfindung schlägt gemäß einem Merkmal nun vor, dass, in einem Querschnitt des Innenverkleidungsteils gesehen, die Dekorschicht bis an das lichtundurchlässige Bauteil herangeführt ist.

Mit anderen Worten ist die Dekorschicht mit einer Stirn- beziehungsweise Randseite bis an das lichtundurchlässige Bauteil herangeführt. Es besteht kein Spalt zwischen der Stirnbeziehungsweise Randseite der Dekorschicht und dem lichtundurchlässigen Bauteil.

Durch die obigen Merkmale werden die Grundvoraussetzungen dafür geschaffen, dass der lichtdurchlässige Körper in einem umlaufenden Randbereich derart lichttechnisch eingekapselt wird, dass er nur noch durch den verbleibenden Durchleuchtungsbereich durchleuchtet werden und somit unerwünschtes, seitlich austretendes Streulicht vermieden werden kann.

Gemäß einer ersten Weiterbildung der Erfindung wird vorgeschlagen, dass ein Lichtleiter vorhanden ist, in den das Licht des wenigstens einen Leuchtmittels einkoppelbar ist. Dabei ist der Lichtleiter in einem Aufnahmeraum einer lichtundurchlässigen Halterung aufgenommen und wird von dem lichtdurchlässigen Körper abgedeckt. Dies erfolgt derart, dass der Lichtleiter vollständig zwischen der lichtundurchlässigen Halterung und dem lichtdurchlässigen Körper aufgenommen ist.

Eine derartige Weiterbildung begünstigt eine kompakte Bauform und trägt zu einer Vermeidung von unerwünschtem Streulicht bei.

Nach einer anderen Ausbildung des Erfindungsgedankens ist der Lichtleiter flächig ausgebildet. Das Licht des wenigstens einen Leuchtmittels wird seitlich in den Lichtleiter eingekoppelt und in Richtung des lichtdurchlässigen Körpers wieder aus dem Lichtleiter ausgekoppelt. Dabei kann der Lichtleiter vorteilhaft auf einem Boden der lichtundurchlässigen Halterung aufliegen.

Eine derartige Ausbildung trägt zu einer kompakten Bauform und zu einer homogenen Lichtabstrahlung bei.

Unter *flächig* im Sinne der vorliegenden Erfindung soll verstanden werden, dass der Lichtleiter eine in zwei zueinander senkrecht stehenden Richtungen verlaufende Flächenerstreckung aufweist, die in jeder Richtung um ein Mehrfaches größer ist als eine Dicke des Gegenstandes.

Die Lichtauskopplung kann hier vorzugsweise über Lichtauskoppelstrukturen realisiert werden, welche an einer einer Lichtabstrahlrichtung abgewandten Seite des Lichtleiters in diesen eingebracht sind oder welche als lichtstreuende Störstellen im Lichtleiter verteilt angeordnet sind.

Um eine gute Funktionsfähigkeit des Innenverkleidungsteils, d. h. bei allen Fahrbedingungen eine gleichbleibende Lichtabstrahleigenschaft zu gewährleisten, wird gemäß einer anderen Weiterbildung vorgeschlagen, dass der Lichtleiter zwischen dem Boden der Halterung und dem lichtdurchlässigen Körper eingeklemmt wird. Des Weiteren trägt diese auch zu einer sehr kompakten Bauform des Innenverkleidungsteils bei.

Es ist in einer anderen Ausbildung des Erfindungsgedankens jedoch auch denkbar, dass der Lichtleiter in der Halterung verklipst ist, derart, dass er zwischen dem Boden und flexiblen Rastmitteln der Halterung eingeklemmt wird. Die Rastmittel können beispielsweise als Rastnasen ausgebildet sein.

Dies hat neben einer hohen Funktionszuverlässigkeit den Vorteil, dass eine gegebenenfalls notwendige Wartung des Innenverkleidungsteils zu Reparaturzwecken erleichtert wird.

Wenn gemäß einer anderen Weiterbildung zwischen dem lichtdurchlässigen Körper und dem Lichtleiter ein lichter Abstand vorhanden ist, so kann die Luft in Nähe des Lichtleiters besser zirkulieren und eine bessere Kühlung des im Betrieb sehr warm werdenden Lichtleiters erzielt werden. Auch kann dadurch zu einer homogenen Lichtabstrahlung beigetragen werden.

In zweckmäßiger Ausgestaltung der Erfindung ist das lichtundurchlässige Bauteil mit der lichtundurchlässigen Halterung verschweißt. Auf diese Weise ist eine sehr funktionssichere, zuverlässige Verbindung zwischen diesen Bauteilen gegeben. Die Verschweißung erfolgt vorzugsweise durch Ultraschallschweißen, welches sich im Praxisbetrieb äußerst bewährt hat.

Zum Zwecke einer zuverlässigen Verschweißung ist es beispielsweise denkbar, dass an das lichtundurchlässige Bauteil rippenartige Schweißvorsprünge angeformt sind, welche durch Öffnungen der lichtundurchlässigen Halterung hindurchragen und deren Enden mit der lichtundurchlässigen Halterung verschweißt sind.

Alternativ ist es denkbar, das lichtundurchlässige Bauteil mit der lichtundurchlässigen Halterung zu verklipsen. Dies trägt ebenfalls zu einer Wartungsfreundlichkeit des Innenverkleidungsteils bei. Die Verklipsung kann vorteilhaft über randseitige Rastarme des lichtundurchlässigen Bauteils erfolgen, die mit nach innen gewichteten Rastnasen die lichtundurchlässige rastend übergreifen.

Nach weiteren Merkmalen der Erfindung wird vorgeschlagen, dass die Dekorschicht, der lichtdurchlässige Körper und das lichtundurchlässige Bauteil ein als Mehrkomponenten-Spritzgussteil ausgebildetes Verbundteil sind. Vorteilhaft ist das Verbundteil ein Zweikomponenten(2K)-Bauteil, bei dem der lichtdurchlässige Körper durch eine transparente Materialkomponente und das lichtundurchlässige Bauteil durch eine opake, vorzugsweise schwarze Materialkomponente gebildet sind.

Eine derartige Weiterbildung ermöglicht eine äußerst kostengünstige und zuverlässige Herstellung des Innenverkleidungsteils.

Das lichtundurchlässige Bauteil ist rahmenartig ausgebildet. Im Querschnitt des Innenverkleidungsteils gesehen überdecken sich das lichtundurchlässige Bauteil und der lichtdurchlässige Körper, eine Material-Grenzfläche ausbildend, daher lediglich in einem randseitigen, umlaufenden Überdeckungsbereich des besagten Verbundteils.

Es ist sehr von Vorteil, wenn sich der die Material-Grenzfläche aufweisende Bereich, in einer Draufsicht auf den Umriss des Innenverkleidungsteils gesehen, außerhalb eines Umrisses des Lichtleiters befindet. Auf diese Weise kann die Gefahr von optischen Beeinträchtigungen, welche durch das Aufeinandertreffen unterschiedlicher Materialkomponenten verursacht sind, spürbar verringert werden.

Hinsichtlich einer Minimierung von Fehlern während des Fließprozesses beim Spritzgießen und hinsichtlich einer sehr guten optischen Qualität verläuft nach weiteren Merkmalen der Erfindung die Material-Grenzfläche, ausgehend von einem umlaufenden Rand des Verbundteils, derart, dass das Material des lichtdurchlässigen Körpers stetig zunimmt, wohingegen das Material des lichtundurchlässigen Bauteils stetig abnimmt.

Mit anderen Worten nimmt die Dicke des lichtdurchlässigen Körpers zum umlaufenden Rand hin also stetig (nicht sprunghaft) ab.

Schließlich soll mit der vorliegenden Erfindung auch ein Kraftfahrzeug unter Schutz gestellt werden, welches wenigstens ein erfindungsgemäßes Innenverkleidungsteil aufweist. Das Innenverkleidungsteil kann beispielsweise Bestandteil einer Instrumententafel und/oder einer Türinnenverkleidung des Kraftfahrzeugs sein.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: den Innenraum eines Kraftfahrzeugs mit erfindungsgemäßen Innenverkleidungsteilen,
- Fig. 2: eine Schnittdarstellung eines erfindungsgemäßen Innenverkleidungsteils gemäß Schnittverlauf II aus Fig. 4, entgegen dem Uhrzeigersinn gedreht,
- Fig. 3: eine Detailansicht gemäß Detail III aus Fig. 2,
- Fig. 4: ein Innenverkleidungsteil in einer Draufsicht auf seinen Umriss,
- Figuren 5 bis 9: Innenverkleidungsteile in einer Schnittansicht vergleichbar mit Schnittverlauf V bis IX aus Fig. 4, in verschiedenen Ausführungsformen, um 90 Grad im Uhrzeigersinn gedreht und
- Fig. 10 (a bis f): eine Darstellung von Verfahrensschritten zur Herstellung des Innenverkleidungsteils.

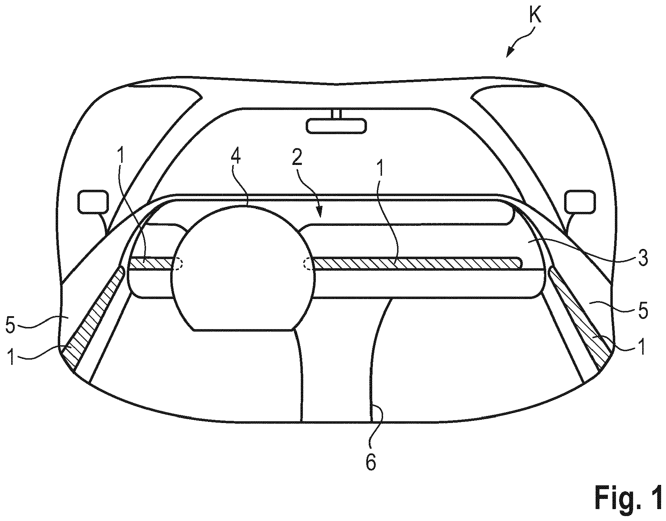

Es wird zunächst auf die Fig. 1 Bezug genommen. In dieser Figur ist ein Innenraum eines Kraftfahrzeugs K im Bereich eines Cockpits 2 ersichtlich. Vom Innenraum des Kraftfahrzeugs K sind eine Instrumententafel 3, ein Lenkrad 4, seitliche Türverkleidungen 5 und eine Mittelkonsole 6 zu erkennen. Ferner sind längliche, leistenartige Innenverkleidungsteile 1 dargestellt, welche sich horizontal über die Instrumententafel 3 und entlang der Türverkleidungen 5 erstrecken.

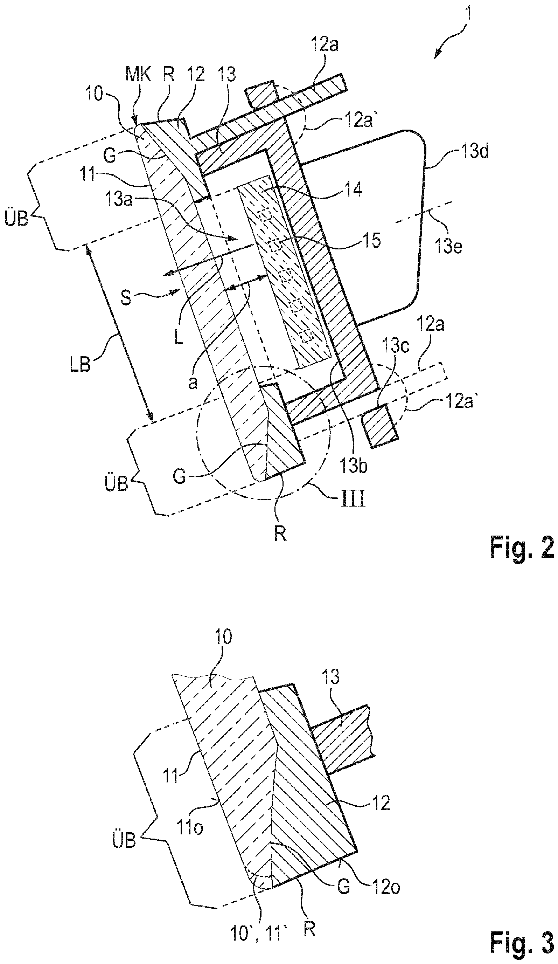

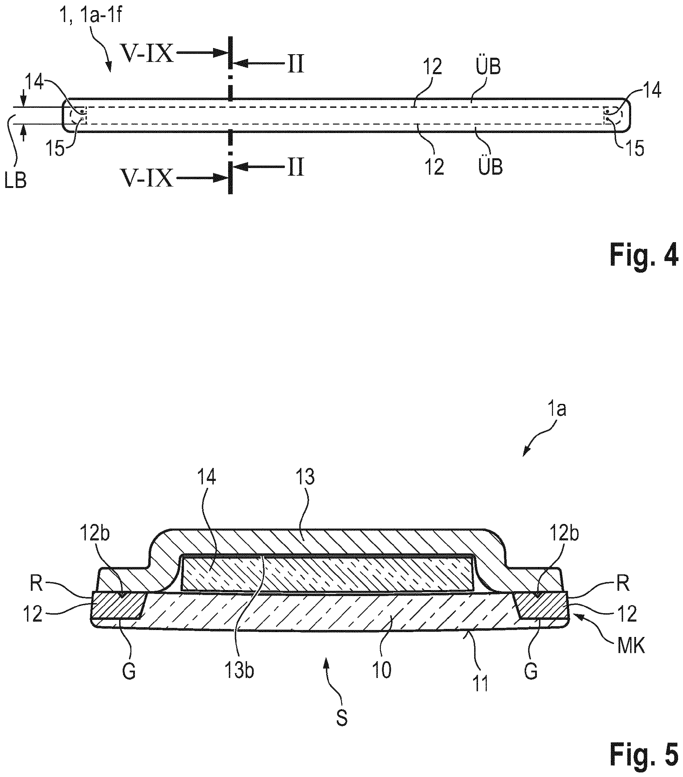

Anhand der Fig. 2 wird nun der allgemeine Aufbau der Innenverkleidungsteile 1 näher beschrieben. Die Schnittansicht wurde gemäß Schnittverlauf II aus Fig. 4 gewählt.

So ist anhand der Figur erkennbar, dass das Innenverkleidungsteil 1 einen lichtdurchlässigen Körper 10 aufweist. Der lichtdurchlässige Körper 10 ist transparent, also glasklar ausgebildet.

Der lichtdurchlässige Körper 10 ist ferner flächig ausgebildet. Seine Flächenerstreckung ist also um ein Mehrfaches größer als seine Dicke.

Eine Seite des lichtdurchlässigen Körpers 10 ist von einer Dekorschicht 11 überzogen. Die Dekorschicht 11 bildet somit eine Sichtseite S für einen im Innenraum des Kraftfahrzeugs K befindlichen Fahrzeuginsassen ab.

Die Dekorschicht 11 ist vorzugsweise eine im sogenannten IMD-Verfahren (IMD = In-Mould Decoration) hergestellte Dekorschicht. Sie kann aus einer oder auch mehreren Farbbeziehungsweise Lackschichten bestehen. Die Dekorschicht 11 ist bereichsweise lichtdurchlässig ausgebildet, und kann auf diese Weise ein durchleuchtbares Muster, durchleuchtbare Schriftzeichen und/oder Symbole oder dergleichen enthalten.

Der lichtdurchlässige Körper 10 ist vorzugsweise an die Dekorschicht 11 angespritzt, also fest mit der Dekorschicht 11 verbunden. Das Verfahren wird später noch näher erläutert. Des Weiteren ist der lichtdurchlässige Körper 10 auf seiner Rückseite im Randbereich mit einem lichtundurchlässigen Bauteil 12 abgedeckt. Das lichtundurchlässige Bauteil 12 ist an den lichtdurchlässigen Körper 10 angespritzt, also ebenfalls fest mit dem lichtdurchlässigen Körper 10 verbunden.

Der lichtdurchlässige Körper 10, die Dekorschicht 11 sowie das lichtundurchlässige Bauteil 12 bilden somit ein aus mehreren unlösbar miteinander verbundenen Komponenten bestehendes Verbundteil MK. Ein umlaufender Rand des Verbundteils MK ist mit R bezeichnet.

Das lichtundurchlässige Bauteil 12 ist im Umriss rahmenartig ausgebildet. Dies führt dazu, dass ein Durchleuchtungsbereich LB entsteht, welcher durch Lichtstrahlen L durchleuchtbar ist, welche durch ein oder mehrere Leuchtmittel 15 (vorzugsweise Leuchtdioden) erzeugbar sind, welche sich im Innenverkleidungsteil 1 befinden.

Das Verbundteil MK beziehungsweise sein lichtundurchlässiger Körper 12 ist mit einer ebenso lichtundurchlässigen Halterung 13 fest verbunden, vorzugsweise verschweißt. Die Halterung 13 kann vorzugsweise mit einer reflektierenden Innenbeschichtung versehen sein und so als Reflektor wirken.

Dazu weist das lichtundurchlässige Bauteil 12 Schweißrippen 12a auf, welche durch Durchgangsöffnungen 13c der Halterung 13 hindurchgesteckt sind und durch den Schweißvorgang zu Schweißbuckeln 12a' umgewandelt werden, damit ein Formschluss zwischen diesen Bauteilen entsteht.

Auf diese Weise wird zwischen dem Verbundteil MK und der Halterung 13 ein im Wesentlichen geschlossener Aufnahmeraum 13a gebildet, in dem ein Lichtleiter 14 aufgenommen ist.

Die Halterung 13 dient also in hier nicht näher dargestellter Weise zur Halterung des Lichtleiters 14. Der Lichtleiter 14 ist ebenfalls flächig ausgebildet und liegt auf einem Boden 13b der Halterung 13 auf.

Der Aufnahmeraum 13a ist dabei vorzugsweise so bemessen, dass ein lichter Abstand a zwischen dem Lichtleiter 14 und dem lichtdurchlässigen Körper 10 verbleibt.

Der Lichtleiter 14 ist ebenfalls vorzugsweise als transparenter Körper ausgebildet. Er kann an seiner dem lichtdurchlässigen Körper 10 abgewandten Rückseite nicht näher dargestellte Lichtauskoppelstrukturen aufweisen, über die von den Leuchtmitteln 15 seitlich in den Lichtleiter 14 eingekoppeltes Licht in Richtung des lichtdurchlässigen Körpers 10 wieder ausgekoppelt wird. Auch die als Reflektor ausgebildete Halterung 13 kann dazu beitragen.

Aus der Figur geht hervor, dass der lichtdurchlässige Körper 10 an der Sichtseite S vollständig von der Dekorschicht 11 überzogen ist. Insbesondere wird anhand von der Figur 3 deutlich, dass die Dekorschicht 11 bis an das lichtundurchlässige Bauteil 12 herangeführt ist. Die Dekorschicht 11 liegt dabei mit einer Rand- bzw. Stirnseite am lichtundurchlässigen Bauteil 12 an.

Bevorzugt sind der lichtdurchlässige Körper 10, das lichtundurchlässige Bauteil 12 und die Dekorschicht 11 derart ausgebildet, dass im Bereich des besagten, umlaufenden Randes R eine Oberfläche 11o der Dekorschicht 11 und eine Oberfläche 12o des lichtundurchlässigen Bauteils 12 bündig aneinanderstoßen.

Abweichend vom Ausführungsbeispiel ist es jedoch auch denkbar, dass der lichtdurchlässige Körper 10 etwas kleiner ausgebildet ist, derart, dass die besagten Oberflächen 11o und 12o nicht bündig aneinanderstoßen, sondern dass sich eine sogenannte Schindelung ergibt. Die Schindelung erfolgt aber nur in der Weise, dass das lichtundurchlässige Bauteil 12 randseitig über den lichtdurchlässigen Körper 10 übersteht (vgl. Bezugszeichen 10', 11').

In jedem Fall ist es wichtig, dass die Dekorschicht 11 bis an das lichtundurchlässige Bauteil 12 herangeführt ist. Bei dem Heranführen der Dekorschicht 11 an das lichtundurchlässige Bauteil 12 verbleibt also kein Spalt mehr zwischen der Dekorschicht 11 und dem lichtundurchlässigen Bauteil 12, durch den unerwünschtes Streulicht entweichen könnte.

Durch eine derartige Konstruktion ergib sich im Randbereich des Verbundteils MK eine lichttechnische Kapselung des lichtdurchlässigen Körpers 10 durch die Dekorschicht 11 auf der einen Seite und durch das lichtundurchlässige Bauteil 12 auf der anderen Seite.

Hierdurch wird die Grundvoraussetzung für eine sehr effiziente Vermeidung von unerwünschtem Streulicht geschaffen.

Wie ferner anhand der Fig. 2 und 3 deutlich wird, wird durch das Verbundteil MK ein umlaufender Überdeckungsbereich ÜB geschaffen, in dem die Materialkomponenten des lichtdurchlässigen Körpers 10 und des lichtundurchlässigen Bauteils 12, eine Material-Grenzfläche G bildend, aneinander liegen.

Es wird an der Darstellung ersichtlich, dass die Material-Grenzfläche G, ausgehend vom umlaufenden Rand R des Verbundteils MK, nach innen zumindest abschnittsweise derart verläuft, dass das Material des lichtdurchlässigen Körpers 10 stetig zunimmt, wohingegen das Material des lichtundurchlässigen Bauteils 12 stetig abnimmt.

Durch einen derartigen Materialverlauf werden die Fließeigenschaften der Werkstoffe beim Herstellungsprozess sehr günstig beeinflusst, wodurch Materialfehler, beispielsweise Verfärbungen im lichtdurchlässigen Körper 10, weitest möglich vermieden werden können.

Des Weiteren sollen noch mehrere rückseitige Befestigungsvorsprünge 13d erwähnt werden, an deren Enden das Innenverkleidungsteil 1 mit Hilfe von Befestigungsmitteln 13e (z.B. Verschraubungen) im Innenraum des Kraftfahrzeugs K befestigt werden kann.

In der Fig. 4 ist das Innenverkleidungsteil, in einer Draufsicht auf seinen Umriss von der Sichtseite S aus gesehen, dargestellt.

Es ist hierbei gestrichelt das rahmenartig umlaufende, lichtundurchlässige Bauteil 12 angedeutet, wodurch der fensterartige Durchleuchtungsbereich LB und der randseitig umlaufende Überdeckungsbereich ÜB gebildet werden.

Ferner ist der längliche, flächige Lichtleiter 14 angedeutet, an dessen gegenüberliegenden Stirnseiten die Leuchtmittel 15 angeordnet sind, deren Licht in den Lichtleiter 14 eingekoppelt werden kann.

Anhand der Figuren 5 bis 9 sollen nun weitere Ausführungsbeispiele für ein Innenverkleidungsteil näher beschrieben werden. Insbesondere wird dadurch auch deutlich, wie der Lichtleiter 14 zuverlässig befestigt werden kann. In den Figuren sind die Leuchtmittel 15 und die Befestigungsvorsprünge 13d aus Gründen der Übersichtlichkeit nicht mehr dargestellt.

So ist in der Fig. 5 ein Innenverkleidungsteil 1a ersichtlich, bei dem die lichtundurchlässige Halterung 13 wannenartig ausgebildet ist und das aus dem lichtdurchlässigen Körper 10 und dem lichtundurchlässigen Bauteil 12 gebildete Verbundteil MK, insbesondere das lichtundurchlässige Bauteil 12 über Schweißpunkte 12b mit der lichtundurchlässigen Halterung 13 verbunden ist. Die Schweißpunkte 12b sind vorzugsweise durch Ultraschallschweißen erzeugt.

Ferner ist aus der Figur ersichtlich, dass die Material-Grenzfläche G, ausgehend vom umlaufenden Rand R zunächst geradlinig und parallel zur rückseitigen Oberfläche des lichtdurchlässigen Körpers 10 verläuft. Bevorzugt wird allerdings ein Verlauf der Material-Grenzfläche G, wie sie anhand der Fig. 2 und 3 ersichtlich ist.

Bei der vorliegenden Ausführungsform wird der Lichtleiter 14 zwischen dem Boden 13b der lichtundurchlässigen Halterung 13 und einer Rückseite des lichtdurchlässigen Körpers 10 eingeklemmt.

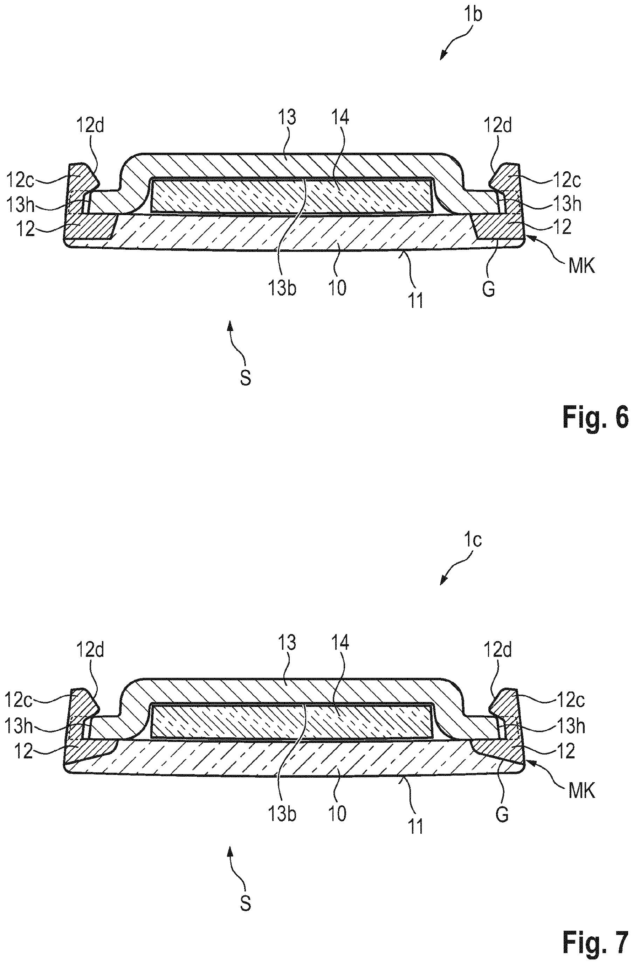

Anhand der Fig. 6 ist ein Ausführungsbeispiel für ein Innenverkleidungsteil 1b dargestellt, bei dem in Abweichung zum vorausgehenden Ausführungsbeispiel die Verbindung zwischen dem Verbundteil MK und der lichtundurchlässigen Halterung 13 über eine Rastverbindung erfolgt.

Konkret sind an das lichtundurchlässige Bauteil 12 rückseitig Rastarme 12c angeformt, die mit als Rastnasen ausgebildeten Rastmitteln 12d randseitige Rastausnehmungen 13h der lichtundurchlässigen Halterung 13 hintergreifen.

Die Verbindung zwischen dem Verbundteil MK und der lichtundurchlässigen Halterung 13 ist hier lösbar ausgebildet. Nach dem Lösen der Verbindung können der Lichtleiter 14 und bei Bedarf auch die Leuchtmittel 15 entnommen werden.

Im Unterschied zur Fig. 6 ist bei einem Innenverkleidungsteil 1c gemäß Fig. 7 der Verlauf der Material-Grenzfläche G wieder vergleichbar zum Verlauf der in den Fig. 2 und 3 gezeigten Material-Grenzfläche G ausgebildet. Auf die dadurch erzielten Vorteile wird daher hier nicht noch einmal erneut eingegangen.

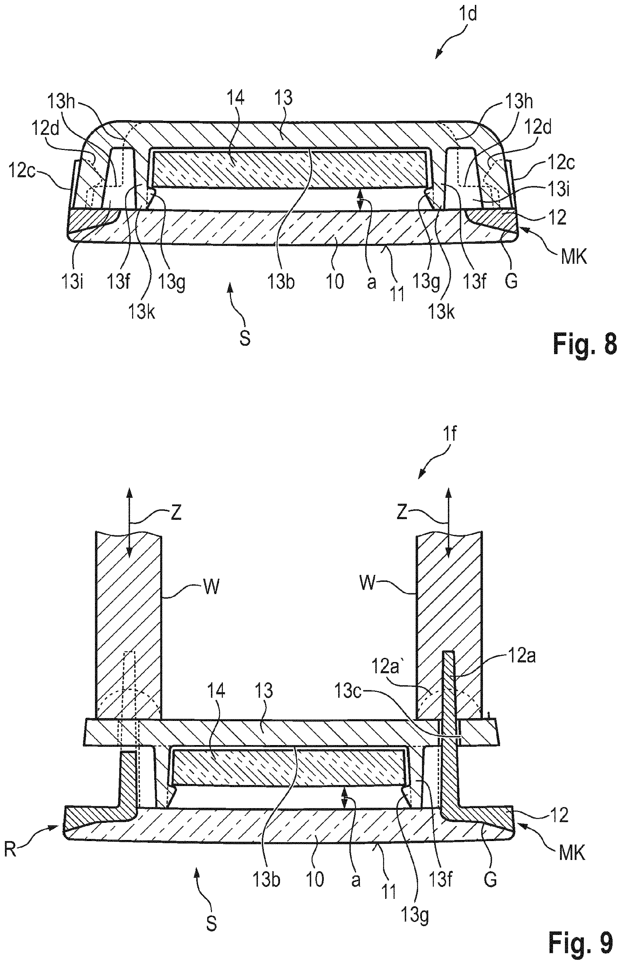

Wie in Fig. 8 anhand eines Innenverkleidungsteils 1d dargestellt wird, ist es jedoch auch denkbar, dass der Lichtleiter 14 mit der lichtundurchlässigen Halterung 13 lösbar verklipst ist. Zu diesem Zweck weist die lichtundurchlässige Halterung 13 mehrere in Richtung des lichtdurchlässigen Körpers 10 abstehende Rastarme 13f auf. Die Rastarme 13f sind, in einer Ansicht auf den Umriss des Innenverkleidungsteils 1d gesehen, innerhalb einer äußeren, umlaufenden Wandung der lichtundurchlässigen Halterung angeordnet, so dass Zwischenräume 13i entstehen. Als Rastnasen ausgebildete Rastmittel 13g der Rastarme 13f übergreifen rastend den auf dem Boden 13b der lichtundurchlässigen Halterung 13 aufliegenden Lichtleiter 14. Dabei sind die Rastarme 13f in der Länge derart gewählt, dass sie (zusätzliche) Auflageflächen 13k für den lichtdurchlässigen Körper 10 ausbilden.

Somit werden ein zuverlässiger Sitz des Lichtleiters 14 im Innenverkleidungsteil 1d und eine sichere Auflage des lichtdurchlässigen Körpers 10 gewährleistet, wobei zusätzlich ein lichter Abstand a zwischen dem Lichtleiter 14 und dem lichtdurchlässigen Körper 10 geschaffen wird.

Eine rastende Verbindung zwischen dem Verbundteil MK und der lichtundurchlässigen Halterung 13 wird wiederum über in Rastausnehmungen 13h der lichtundurchlässigen Halterung 13 eingreifende Rastarme 12c bewerkstelligt.

Schließlich ist in Fig. 9 ein Innenverkleidungsteil 1f dargestellt, bei dem im Unterschied zum vorherigen Ausführungsbeispiel das Verbundteil MK beziehungsweise das lichtundurchlässige Bauteil 12 mit der lichtundurchlässigen Halterung 13 verschweißt ist. Auch hier erfolgt dies über an das lichtundurchlässige Bauteil 12 angeformte Schweißrippen 12a, die durch Durchgangsöffnungen 13c der lichtundurchlässigen Halterung 13 hindurchragen und deren Enden mit Hilfe eines Schweißwerkzeugs W nach einer erfolgten Zustellbewegung Z zu Schweißbuckeln 12a' transformiert werden.

Der Verlauf der Material-Grenzfläche G entspricht auch hier dem Prinzip, dass, ausgehend von einem Randbereich R des Verbundteils MK, zumindest abschnittsweise das Material des lichtdurchlässigen Körpers 10 stetig zunimmt, wohingegen das Material des lichtundurchlässigen Bauteils 12 stetig abnimmt.

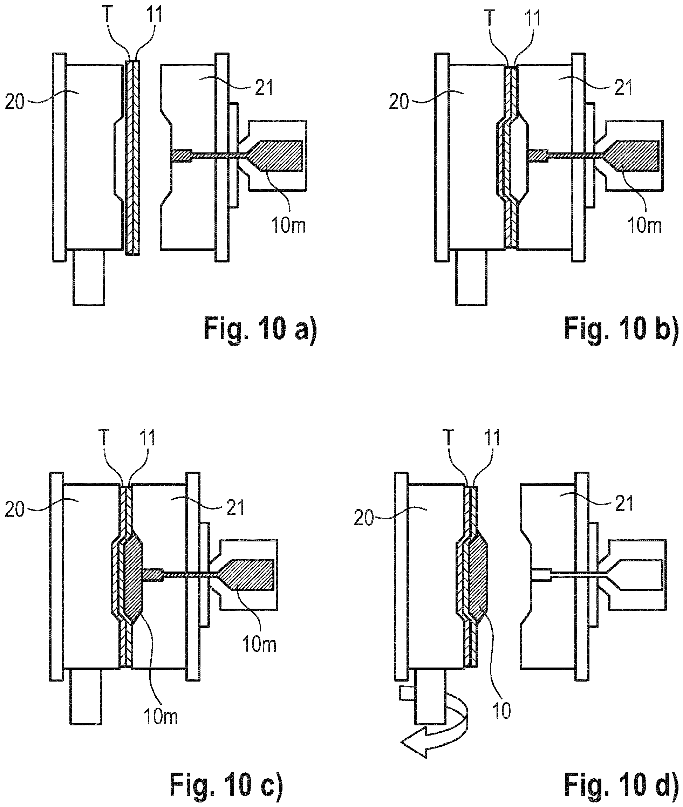

Anhand der Fig. 10a bis 10f soll nunmehr ein bevorzugtes Herstellverfahren für die Innenverkleidungsteile 1 beziehungsweise 1a bis 1f näher erläutert werden.

So wird zunächst eine im sogenannten IMD-Verfahren hergestellte, auf einer Trägerfolie T aus thermoplastischem Kunststoff (z. B. PET-Folie, also aus Polyethylenterephthalat) befindliche, folienartige Dekorschicht 11 in ein Werkzeug eingelegt.

Die Dekorschicht 11 besteht aus einer oder mehrerer Farbschichten. Die Farbschichten sind vorzugsweise als Lackschichten ausgebildet. Die Ausbildung erfolgt ferner derart, dass die Dekorschicht 11 lichtdurchlässige und lichtundurchlässige Bereiche aufweist. Durch die genannten Bereiche können Muster, Schriftzeichen, Symbole und dergleichen geschaffen werden.

Das Werkzeug besteht aus einer ersten Werkzeugform 20 und einer zweiten Werkzeugform 21 (Fig. 10a).

Durch das Schließen der Werkzeugformen 20 und 21 erfolgt eine Umformung der Trägerfolie T mit samt der Dekorschicht 11 (Fig. 10b).

Anschließend wird bei einer Temperatur von etwa 200 °C die Dekorschicht 11 mit einem lichtdurchlässigen Material 10m (ebenfalls thermoplastischer Kunststoff) hinterspritzt (Fig. 10c).

Danach, also nach dem Aushärten des lichtdurchlässigen Materials 10m zum lichtdurchlässigen Körper 10, werden die Werkzeugformen 20 und 21 wieder auseinandergefahren und das Werkzeugform 20 wird um 180 Grad gedreht (Fig. 10d).

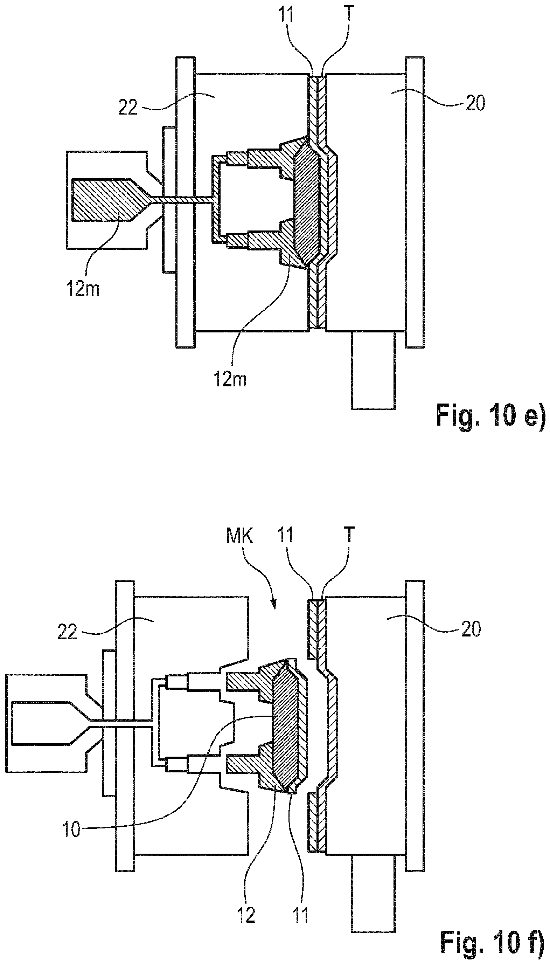

Von der gegenüberliegenden Seite wird anschließend eine weitere Werkzeugform 22 an die erste Werkzeugform 20 herangeführt. Nunmehr kann der lichtdurchlässige Körper 10 mit einem lichtundurchlässigen Material 12m (ebenfalls ein thermoplastischer Kunststoff) als zweite Materialkomponente hinterspritzt werden (Fig. 10e).

Nach dem Aushärten des lichtundurchlässigen Materials 12m zum lichtundurchlässigen Bauteil 12 werden die Werkzeugformen 20 und 22 wieder auseinandergefahren, so dass das fertige, aus der Dekorschicht 11, dem lichtdurchlässigen Körper 10 und dem lichtundurchlässigen Bauteil 12 bestehende Verbundteil MK entnommen werden kann. Bei diesem Vorgang wird die auf dem Verbundteil MK befindliche Dekorschicht 11 von der Trägerfolie T gelöst (vergleiche Fig. 10f).

Dadurch, dass im vorausgehenden Verfahrensschritt die zweite Materialkomponente nicht mit auf die Dekorschicht 11, sondern in einer zweiten Werkzeugkavität der Werkzeugform 22 auf den lichtdurchlässigen Körper 10 gespritzt wurde, sind auf der die Sichtseite S bildenden Oberfläche der Dekorschicht 11 bzw. des Verbundteils MK keine Zusammenflusslinien der unterschiedlichen Materialkomponenten zu sehen. Dafür wird die zweite Materialkomponente (Material 12m) mit möglichst geringem Werkzeugversatz auf die Werkzeugtrennung und Abrisskante des ersten Spritzgusses (Material 10m) gespritzt.

### Bezugszeichenliste

- 1, 1a-1f: Innenverkleidungsteil
- 2: Cockpit
- 3: Instrumententafel
- 4: Lenkrad
- 5: Türverkleidung
- 6: Mittelkonsole
- 10, 10': lichtdurchlässiger Körper
- 10m: lichtdurchlässiges Material
- 11, 11': Dekorschicht
- 11o: Oberfläche
- 12: lichtundurchlässiges Bauteil
- 12a: Schweißrippen
- 12a`: Schweißbuckel
- 12b: Schweißpunkt
- 12c: Rastarm
- 12d: Rastmittel
- 12o: Oberfläche
- 12m: lichtundurchlässiges Material
- 13: lichtundurchlässige Halterung
- 13a: Aufnahmeraum
- 13b: Boden
- 13c: Durchgangsöffnung
- 13d: Befestigungsvorsprung
- 13e: Befestigungsmittel
- 13f: Rastarm
- 13g: Rastmittel
- 13h: Rastausnehmungen
- 13i: Zwischenräume
- 13k: Auflageflächen
- 14: Lichtleiter
- 15: Leuchtmittel, LEDs
- 20: Werkzeugform
- 21: Werkzeugform
- 22: Werkzeugform

- a: lichter Abstand
- G: Material-Grenzfläche
- K: Kraftfahrzeug
- L: Lichtstrahl
- LB: Durchleuchtungsbereich
- MK: Verbundteil
- R: umlaufender Rand
- S: Sichtseite
- T: Trägerfolie
- ÜB: Überdeckungsbereich
- W: Schweißwerkzeug
- Z: Zustellbewegung

## Patentansprüche

1. Innenverkleidungsteil (1, 1a-1f) für ein Kraftfahrzeug (K), mit einem transparenten Körper (10), der auf einer Seite von einer eine Sichtseite (S) bildenden, zumindest bereichsweise durchleuchtbaren Dekorschicht (11) abgedeckt ist, wobei wenigstens ein lichtundurchlässiges Bauteil (12) mit Randbereichen und/oder mit einer Rückseite des transparenten Körpers (10) verbunden ist, derart, dass wenigstens ein Durchleuchtungsbereich (LB) des transparenten Körpers (10) verbleibt, der mit Lichtstrahlen (L) wenigstens eines im Innenverkleidungsteil (1, 1a-1f) angeordneten Leuchtmittels (15) durchleuchtbar ist, wobei das lichtundurchlässige Bauteil (12) rahmenartig ausgebildet ist, so dass sich, im Querschnitt des Innenverkleidungsteils (1, 1a-1f) gesehen, das lichtundurchlässige Bauteil (12) und der transparente Körper (10) lediglich in einem randseitigen Überdeckungsbereich (ÜB), eine Material-Grenzfläche (G) ausbildend, überdecken, **dadurch gekennzeichnet, dass**, in einem Querschnitt des Innenverkleidungsteils (1, 1a-1f) gesehen, die Dekorschicht (11) bis an das lichtundurchlässige Bauteil (12) herangeführt ist, wobei die Dekorschicht (11), der transparente Körper (10) und das lichtundurchlässige Bauteil (12) ein als Mehrkomponenten-Spritzgussteil ausgebildetes Verbundteil (MK) sind und die Material-Grenzfläche (G), ausgehend von einem umlaufenden Rand (R) des Verbundteils (MK), nach innen zumindest abschnittsweise derart verläuft, dass das Material des transparenten Körpers (10) stetig zunimmt, wohingegen das Material des lichtundurchlässigen Bauteils (12) stetig abnimmt.

2. Innenverkleidungsteil (1, 1a-1f) nach dem vorhergehenden Anspruch, **dadurch gekennzeichnet, dass** ein Lichtleiter (14) vorhanden ist, in den das Licht des wenigstens einen Leuchtmittels (15) einkoppelbar ist, wobei der Lichtleiter (14) in einem Aufnahmeraum (13a) einer lichtundurchlässigen Halterung (13) aufgenommen ist und von dem transparenten Körper (10) abgedeckt wird, derart, dass der Lichtleiter (14) vollständig zwischen der lichtundurchlässigen Halterung (13) und dem transparenten Körper (10) aufgenommen ist.

3. Innenverkleidungsteil (1, 1a-1f) nach Anspruch 2, **dadurch gekennzeichnet, dass** der Lichtleiter (14) flächig ausgebildet ist und das Licht des wenigstens einen Leuchtmittels seitlich in den Lichtleiter (14) einkoppelbar ist oder eingekoppelt wird und in Richtung des lichtdurchlässigen Körpers (10) wieder aus dem Lichtleiter (14) auskoppelbar ist oder ausgekoppelt wird, wobei der Lichtleiter (14) auf einem Boden (13b) der Halterung (13) aufliegt.

4. Innenverkleidungsteil (1, 1a-1f) nach Anspruch 3, **dadurch gekennzeichnet, dass** der Lichtleiter (14) zwischen dem Boden (13b) der Halterung (13) und dem transparenten Körper (10) eingeklemmt wird.

5. Innenverkleidungsteil (1, 1a-1f) nach Anspruch 3, **dadurch gekennzeichnet, dass** der Lichtleiter (14) in der Halterung (13) verklipst ist, derart, dass er zwischen dem Boden (13b) und flexiblen Rastmitteln (13g) der Halterung (13) eingeklemmt wird.

6. Innenverkleidungsteil (1, 1a-1f) nach einem der vorhergehenden Ansprüche, **dadurch gekennzeichnet, dass** zwischen dem transparenten Körper (10) und dem Lichtleiter (14) ein lichter Abstand (a) vorhanden ist.

7. Innenverkleidungsteil (1, 1a-1f) nach einem der Ansprüche 2 bis 6, **dadurch gekennzeichnet, dass** das lichtundurchlässige Bauteil (12) mit der lichtundurchlässigen Halterung (13) verschweißt ist.

8. Innenverkleidungsteil (1, 1a-1f) nach Anspruch 7, **dadurch gekennzeichnet, dass** an das lichtundurchlässige Bauteil (12) rippenartige Schweißvorsprünge (12a) angeformt sind, welche durch Öffnungen (13c) der lichtundurchlässigen Halterung (13) hindurchragen und deren Enden mit der lichtundurchlässigen Halterung (13) verschweißt sind.

9. Innenverkleidungsteil (1, 1a-1f) nach einem der vorhergehenden Ansprüche 2 bis 6, **dadurch gekennzeichnet, dass** das lichtundurchlässige Bauteil (12) mit der lichtundurchlässigen Halterung (13) verklipst ist.

10. Innenverkleidungsteil (1, 1a-1f) nach einem der vorhergehenden Ansprüche, **dadurch gekennzeichnet, dass** sich der die Material-Grenzfläche (G) aufweisende Überdeckungsbereich (ÜB), in einer Draufsicht auf den Umriss des Innenverkleidungsteils (1, 1a-1f) gesehen, außerhalb eines Umrisses des Lichtleiters (14) befindet oder höchstens an diesen heranreicht.

11. Kraftfahrzeug (K), **gekennzeichnet durch** wenigstens ein Innenverkleidungsteil (1, 1a-1f) mit den Merkmalen von einem der Ansprüche 1 bis 10.

## Claims

1. An interior trim part (1, 1a-1f) for a motor vehicle (K), having a transparent body (10) that is covered on one side by a decorative layer (11) that forms a visible side (S) and can be transilluminated at least in regions, wherein at least one opaque component (12) is connected to edge regions and/or to a rear side of the transparent body (10), in such a way that at least one transillumination region (LB) of the transparent body (10) remains, which can be transilluminated by light beams (L) of at least one illuminant (15) arranged in the interior trim part (1, 1a-1f), wherein the opaque component (12) is designed in a frame-like manner, so that, viewed in cross section of the interior trim part (1, 1a-1f), the opaque component (12) and the transparent body (10) overlap only in an overlapping region (ÜB) at the edge, forming a material interface (G), **characterized in that,** viewed in a cross section of the interior trim part (1, 1a-1f), the decorative layer (11) is brought up to the opaque component (12), wherein the decorative layer (11), the transparent body (10) and the opaque component (12) are a composite part (MK) formed as a multi-component injection-molded part and the material interface (G), starting from a circumferential edge (R) of the composite part (MK), extends inwards at least in portions in such a way that the material of the transparent body (10) increases steadily, whereas the material of the opaque component (12) decreases steadily.

2. The interior trim part (1, 1a-1f) according to the preceding claim, **characterized in that** a light guide (14) is present, into which the light of the at least one illuminant (15) can be coupled, wherein the light guide (14) is accommodated in a receiving space (13a) of an opaque holder (13) and is covered by the transparent body (10) in such a way that the light guide (14) is completely accommodated between the opaque holder (13) and the transparent body (10).

3. The interior trim part (1, 1a-1f) according to claim 2, **characterized in that** the light guide (14) is designed to be flat and the light of the at least one illuminant can be or is coupled laterally into the light guide (14) and can be or is coupled out of the light guide (14) again in the direction of the light-transmitting body (10), wherein the light guide (14) rests on a base (13b) of the holder (13).

4. The interior trim part (1, 1a-1f) according to claim 3, **characterized in that** the light guide (14) is clamped between the base (13b) of the holder (13) and the transparent body (10).

5. The interior trim part (1, 1a-1f) according to claim 3, **characterized in that** the light guide (14) is clipped in the holder (13) in such a way that it is clamped between the base (13b) and flexible latching means (13g) of the holder (13).

6. The interior trim part (1, 1a-1f) according to any of the preceding claims, **characterized in that** there is a clear gap (a) between the transparent body (10) and the light guide (14).

7. The interior trim part (1, 1a-1f) according to any of claims 2 to 6, **characterized in that** the opaque component (12) is welded to the opaque holder (13).

8. The interior trim part (1, 1a-1f) according to claim 7, **characterized in that** rib-like welding projections (12a) are formed on the opaque component (12), which projections project through openings (13c) of the opaque holder (13) and the ends thereof are welded to the opaque holder (13).

9. The interior trim part (1, 1a-1f) according to any of the preceding claims 2 to 6, **characterized in that** the opaque component (12) is clipped to the opaque holder (13).

10. The interior trim part (1, 1a-1f) according to any of the preceding claims, **characterized in that** the overlapping region (ÜB) having the material interface (G), viewed in a plan view of the outline of the interior trim part (1, 1a-1f), is located outside an outline of the light guide (14) or at most reaches up to it.

11. A motor vehicle (K), **characterized by** at least one interior trim part (1, 1a-1f) having the features of one of claims 1 to 10.

## Revendications

1. Pièce d'habillage intérieur (1, 1a à 1f) pour un véhicule automobile (K), comportant un corps transparent (10) qui est recouvert sur un côté par une couche décorative (11) pouvant être éclairée par transparence au moins par zones et formant un côté visible (S), dans laquelle au moins un composant opaque (12) est relié à des zones de bordure et/ou à un côté arrière du corps transparent (10), de telle sorte qu'il reste au moins une zone éclairée par transparence (LB) du corps transparent (10) qui peut être éclairée par des rayons lumineux (L) d'au moins un moyen d'éclairage (15) disposé dans la pièce d'habillage intérieur (1, 1a à 1f), dans laquelle le composant opaque (12) est réalisé en forme de cadre de telle sorte que, vu en coupe transversale de la pièce d'habillage intérieur (1, 1a à 1f), le composant opaque (12) et le corps transparent (10) se recouvrent uniquement dans une zone de recouvrement (ÜB) côté bordure, en réalisant une surface d'interface de matériau (G), **caractérisée en ce que**, vue dans une section transversale de la pièce d'habillage intérieur (1, 1a à 1f), la couche décorative (11) est amenée jusqu'au composant opaque (12), dans laquelle la couche décorative (11), le corps transparent (10) et le composant opaque (12) sont une pièce composite (MK) réalisée sous la forme d'une pièce moulée par injection à plusieurs composants et la surface d'interface de matériau (G), partant d'une bordure périphérique (R) de la pièce composite (MK), s'étend vers l'intérieur au moins par sections de telle sorte que le matériau du corps transparent (10) augmente constamment, tandis que le matériau du composant opaque (12) diminue constamment.

2. Pièce d'habillage intérieur (1, 1a à 1f) selon la revendication précédente, **caractérisée en ce qu'**il existe un guide de lumière (14) dans lequel la lumière de l'au moins un moyen d'éclairage (15) peut être couplée, dans laquelle le guide de lumière (14) est reçu dans un espace de réception (13a) d'un support opaque (13) et est recouvert par le corps transparent (10), de telle sorte que le guide de lumière (14) est entièrement reçu entre le support opaque (13) et le corps transparent (10).

3. Pièce d'habillage intérieur (1, 1a à 1f) selon la revendication 2, **caractérisée en ce que** le guide de lumière (14) est réalisé plat et la lumière de l'au moins un moyen d'éclairage peut être couplée ou est couplée latéralement dans le guide de lumière (14) et peut être à nouveau couplée ou découplée du guide de lumière (14) en direction du corps transparent (10), dans laquelle le guide de lumière (14) repose sur un fond (13b) du support (13).

4. Pièce d'habillage intérieur (1, 1a à 1f) selon la revendication 3, **caractérisée en ce que** le guide de lumière (14) est serré entre le fond (13b) du support (13) et le corps transparent (10).

5. Pièce d'habillage intérieur (1, 1a à 1f) selon la revendication 3, **caractérisée en ce que** le guide de lumière (14) est clipsé dans le support (13) de manière à être serré entre le fond (13b) et des moyens d'encliquetage flexibles (13g) du support (13).

6. Pièce d'habillage intérieur (1, 1a à 1f) selon l'une des revendications précédentes, **caractérisée en ce qu'**une distance libre (a) est présente entre le corps transparent (10) et le guide de lumière (14).

7. Pièce d'habillage intérieur (1, 1a à 1f) selon l'une des revendications 2 à 6, **caractérisée en ce que** le composant opaque (12) est soudé au support opaque (13).

8. Pièce d'habillage intérieur (1, 1a à 1f) selon la revendication 7, **caractérisée en ce que** des saillies soudées (12a) en forme de nervures sont moulés sur le composant opaque (12), lesquelles saillies traversent des ouvertures (13c) du support opaque (13) et dont les extrémités sont soudées au support opaque (13).

9. Pièce d'habillage intérieur (1, 1a à 1f) selon l'une quelconque des revendications précédentes 2 à 6, **caractérisée en ce que** le composant opaque (12) est clipsé sur le support opaque (13).

10. Pièce d'habillage intérieur (1, 1a à 1f) selon l'une des revendications précédentes, **caractérisée en ce que** la zone de recouvrement (ÜB) présentant la surface d'interface de matériau (G) se trouve, vue de dessus sur le contour de la pièce d'habillage intérieur (1, 1a à 1f), à l'extérieur d'un contour du guide de lumière (14) ou s'en approche au plus.

11. Véhicule automobile (K), **caractérisé par** au moins une pièce d'habillage intérieur (1, 1a à 1f) comportant les caractéristiques de l'une des revendications 1 à 10.
